# EUROPÄISCHE PATENTSCHRIFT

(11) **EP 2 474 219 B1**
(45) Veröffentlichungstag und Bekanntmachung des Hinweises auf die Patenterteilung: **10.12.2014**
(21) Anmeldenummer: 11184835.4
(22) Anmeldetag: 12.10.2011
(51) Int. Cl.: A01D 41/12

(54) **Mähdrescher mit einer Verteilvorrichtung zur Verteilung gehäckselten Erntegutes**
Combine harvester with a distribution device for distributing cut harvested goods
Moissonneuse-batteuse dotée d'un dispositif de répartition pour la répartition de produits de récolte hachés

(30) Priorität: 07.01.2011 DE 102011000057
(43) Veröffentlichungstag der Anmeldung: 11.07.2012
(73) Patentinhaber: CLAAS Selbstfahrende Erntemaschinen GmbH, 33428 Harsewinkel (DE)
(72) Erfinder: Eggenhaus, Georg, 48369 Saerbeck (DE); Terörde, Stefan, 48231 Warendorf (DE); Baumgarten, Joachim, Dr., 48361 Beelen (DE); Vieregge, Christopher, 32649 Dörentrup (DE); Heitmann, Christoph, 48231 Warendorf (DE)

(56) Entgegenhaltungen:
- EP-A1- 0 685 151
- EP-A2- 0 537 621
- EP-B1- 1 570 726
- US-A- 4 671 108

## Beschreibung

Die vorliegende Erfindung betrifft einen Mähdrescher mit einer Verteilvorrichtung zur Verteilung gehäckselten Erntegutes gemäß dem Oberbegriff des Anspruches 1. Weiterhin betrifft die vorliegende Erfindung ein Verfahren zum Betreiben einer Steuerungseinrichtung zur Steuerung einer Verteilvorrichtung von Häckselgut gemäß dem Oberbegriff des Anspruches 7.

Die EP 0 685 151 A1 offenbart einen Mähdrescher gemäß dem Oberbegriff des Anspruches 1, mit einer Verteilvorrichtung zur Verteilung von gehäckseltem Erntegut, die mit einer Steuereinrichtung in Verbindung steht, um die Verteileigenschaften der Verteilvorrichtung zu steuern. Im Heckbereich des Mähdreschers ist beidseitig der Verteilvorrichtung an den Gehäuseblechen des Mähdreschers jeweils eine als Drucksensor ausgeführt Windmesseinrichtung zur Messung der Windrichtung und der Windgeschwindigkeit angeordnet. Die Messung der der Windrichtung und der Windgeschwindigkeit erfolgt durch die Ermittlung von durch Wind-Staudruck hervorgerufenen elastischen Verformungen der Gehäusebleche.

Aus der EP 1 570 726 B1 ist ein Mähdrescher mit einer Verteilvorrichtung zur Abgabe von gehäckselten Erntegutresten bekannt, die mit variabler Geschwindigkeit antreibbar ist. Zur Erzielung einer gleichbleibenden Verteilbreite wird der die Verteilvorrichtung antreibende Antrieb durch eine Steuervorrichtung kontrolliert. Die Steuerungseinrichtung verfügt über Sensoren, welche die Umgebungsbedingungen überwachen, um die gleichmäßige Verteilung des gehäckselten Erntegutes durch die Verteilvorrichtung zu steuern. Hierzu ist ein Sensor zur Erfassung der Seitenwindgeschwindigkeit vorgesehen, der diese während des Betriebes des Mähdreschers erfasst. Die Steuerungseinrichtung berechnet auf der erfassten Seitenwindgeschwindigkeit basierend einen Ausgleich, um die Antriebsgeschwindigkeit der Verteilvorrichtung an die Umgebungsbedingungen anzupassen. Die Anordnung des Seitenwindsensors ist oberhalb des Kabinendaches auf dem Korntank des Mähdreschers gewählt, so dass dieser frei im Wind steht.

Als nachteilig an der Anordnung eines Windanemometers oberhalb des Korntanks erweist sich, dass die dort erfassten Seitenwindverhältnisse nicht den tatsächlichen Seitenwindverhältnissen in dem Bereich der Verteilvorrichtung entsprechen, in dem das gehäckselte Erntegut ausgebracht wird.

Aufgabe der vorliegenden Erfindung ist es, die Nachteile des Standes der Technik zu überwinden und eine an die jeweiligen Gegebenheiten angepasste Verteilung des Erntegutes auf dem Boden zu erreichen.

Diese Aufgabe wird erfindungsgemäß durch die kennzeichnenden Merkmale des Anspruches 1 gelöst.

Vorteilhafte Weiterbildungen sind Gegenstand der Unteransprüche.

Gemäß Anspruch 1 wird vorgeschlagen, dass über die zwei Windmesseinrichtungen die Windrichtung und die Windstärke des Seitenwindes repräsentierende Signale erzeugt und von der Steuerungseinrichtung miteinander verglichen werden, und dass das Signal, welches eine größere Signalstärke aufweist, der Steuerungseinrichtung zur Ansteuerung der Verteilvorrichtung zu Grunde gelegt wird, um die Grundeinstellung an sich ändernde Verteilbedingungen anzupassen. Auf diese Weise wird erreicht, dass bei einer auch teilweisen Abschattung einer der beiden Windmesseinrichtungen durch den Mähdrescher ein die tatsächlichen Seitenwindverhältnisse repräsentierendes Signal bereitgestellt wird, um die Verteilvorrichtung anzusteuern. Die beidseitige und vorzugsweise einander gegenüberliegende Anordnung zweier Windmesseinrichtungen weist den Vorteil auf, dass der Einfluss, den eine durch den Mähdrescher auftretende Windabschattung auf einer der beiden Seiten des Mähdreschers auf die Windmesseinrichtungen haben kann, minimiert wird. Durch die Anordnung der Windmesseinrichtungen im Heckbereich des Mähdreschers werden Messsignale generiert, die den Seitenwindverhältnissen in unmittelbarer Nähe zu der Verteilvorrichtung entsprechen. Ein weiterer Vorteil dieser Position ergibt sich aus der vereinfachten Nachrüstbarkeit eines Mähdreschers, ohne dass ein Eingriff in die Grundkonstruktion notwendig würde.

Insbesondere können die beiden Windmesseinrichtungen in einer gemeinsamen horizontalen Ebene am Mähdrescher angeordnet sein. Bei einer wechselseitigen Windabschattung einer der beiden Windmesseinrichtungen durch den Mähdrescher selbst, beispielsweise nach einer Vorgewendefahrt, werden stets die gleichen Messbedingungen beibehalten, unabhängig davon, welche der beiden Messeinrichtung vom Mähdrescher abgeschattet wird, da sich im Allgemeinen zumindest eine der beiden Windmesseinrichtungen auf der dem Wind zugewandten Seite des Mähdreschers befindet.

In bevorzugter Weiterbildung können die beiden Windmesseinrichtungen oberhalb der Verteilvorrichtung und unterhalb einer horizontalen, den Mährescher in vertikaler Richtung begrenzenden Ebene positioniert sein, vorzugsweise unterhalb der Ebene des Korntankdeckels oder unterhalb eines sich im Wesentlichen horizontal erstreckenden Abtankrohres.

Vorzugsweise können die Windmesseinrichtungen jeweils eine um eine horizontale Achse schwenkbar aufgehängte Platte umfassen, deren durch Windeinfluss hervorgerufene Auslenkung erfassbar ist.

Dabei kann die jeweilige Windmesseinrichtung einen Winkelsensor umfassen, der die Auslenkung der Platte erfasst. Vorzugsweise kann der Winkelsensor dabei als ein Drehpotentiometer ausgebildet sein.

Insbesondere kann die Auslenkung der Platte durch Endanschläge begrenzt sein, um ein Überschlagen der Platte um die horizontale Achse zu vermeiden. Die Begrenzung der Auslenkung liegt bei einem Betrag von etwa 45°.

Des Weiteren betrifft die Erfindung ein Verfahren zum Betreiben einer Steuerungseinrichtung zur Steuerung einer Verteilvorrichtung von Häckselgut, bei welchem eine Grundeinstellung zur Steuerung der Verteilvorrichtung vorgegeben wird. Die Grundeinstellung umfasst die Vorgabe der Streurichtung, der Streubreite sowie des Abstandes zur Bestandskante durch eine Bedienperson.

Der Erfindung liegt weiterhin die Aufgabe zu Grunde, ein Verfahren zum Betreiben einer Steuerungseinrichtung zur Steuerung einer Verteilvorrichtung von Häckselgut bereit zu stellen, welches die äußeren Einflüsse auf den Vorgang der Seitenwinderfassung berücksichtigt.

Gemäß dem Verfahrensanspruch 7 wird vorgeschlagen, dass über zwei Windmesseinrichtungen Signale, die die Windrichtung und die Windstärke repräsentieren, erzeugt und von der Steuerungseinrichtung miteinander verglichen werden, und dass das Signal, welches eine größere Signalstärke aufweist, der Steuerungseinrichtung zur Ansteuerung der Verteilvorrichtung zu Grunde gelegt wird, um die Grundeinstellung an sich ändernde Verteilbedingungen anzupassen. Auf diese Weise wird erreicht, dass bei einer auch teilweisen Abschattung einer der beiden Windmesseinrichtungen durch den Mähdrescher ein die tatsächlichen Seitenwindverhältnisse repräsentierendes Signal bereitgestellt wird, um die Verteilvorrichtung anzusteuern.

Vorzugsweise kann das zur Ansteuerung verwendete Signal um einen variabel einstellbaren Verstärkungsfaktor verstärkt werden. Dieser Verstärkungsfaktor dient der Übersteuerung der voreingestellten Grundeinstellung der Verteileigenschaften, wie Streurichtung, Streubreite oder Abstand zur Bestandskante, sowie der Berücksichtigung der Neigung des Mähdreschers während des aktiven Ernteprozesses, um die Streurichtung der Verteilvorrichtung entsprechend anzupassen.

Hierzu kann der Verstärkungsfaktor in Abhängigkeit von Ernteguteigenschaften eingestellt werden. Als Ernteguteigenschaften können die Art des Erntegutes, die Feuchtigkeit oder die Bestandshöhe einfließen. Der Einfluss insbesondere der Bestandshöhe wird beispielsweise bei der Ernte von Mais deutlich, bei der auf Grund der Bestandshöhe des zu erntenden Mais' der Einfluss von Seitenwind in Folge der Abschattung durch den Bestand der Verteilvorrichtung vernachlässigbar ist. In einem solchen Fall müsste die Streubreite nicht in Folge des Auftretens von Seitenwind übersteuert werden. Hingegen würde eine Fahrt am Hang berücksichtigt werden, so dass die Streurichtung entsprechend angepasst wird.

Die Auswahl oder eine Nachjustierung des Verstärkungsfaktors kann auf Grund einer Sichtprüfung des erreichten Verteilergebnisses durch eine Bedienperson des Mähdreschers erfolgen.

Um Störeinflüsse, wie beispielsweise Maschinenvibrationen oder plötzliche Auslenkungen, hervorgerufen durch starke Unebenheiten im Boden, ausgleichen zu können, können die Sensorsignale von der Steuerungseinrichtung vor dem Vergleich miteinander über einen Mittelwertfilter geglättet werden.

Die Erfindung wird nachstehend anhand von in den Zeichnungen dargestellten Ausführungsbeispielen näher erläutert.

Es zeigen:
- Fig. 1: eine Teilansicht der Rückseite eines Mähdreschers in einer ersten Ausführungsform;
- Fig. 2: eine Teilansicht der Rückseite eines Mähdreschers in einer zweiten Ausführungsform;
- Fig. 3: ein Flussdiagramm eines Verfahrens zum Betreiben einer Steuerungseinrichtung.

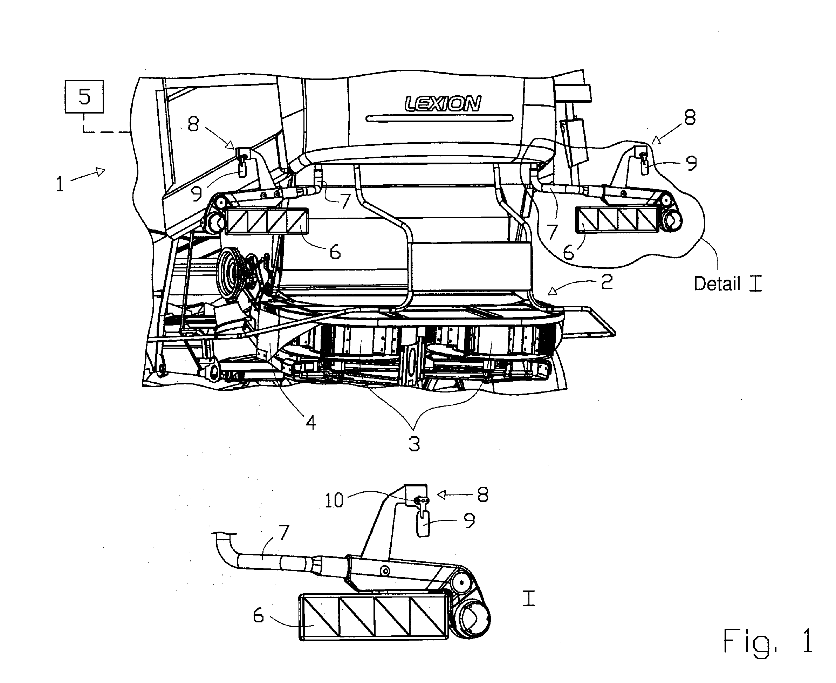

Die Darstellung in Fig. 1 zeigt eine Teilansicht der Rückseite eines an sich bekannten und daher nicht näher dargestellten Mähdreschers 1 mit einer Verteilvorrichtung 2, mit der gehäckseltes Erntegut ausgebracht wird.

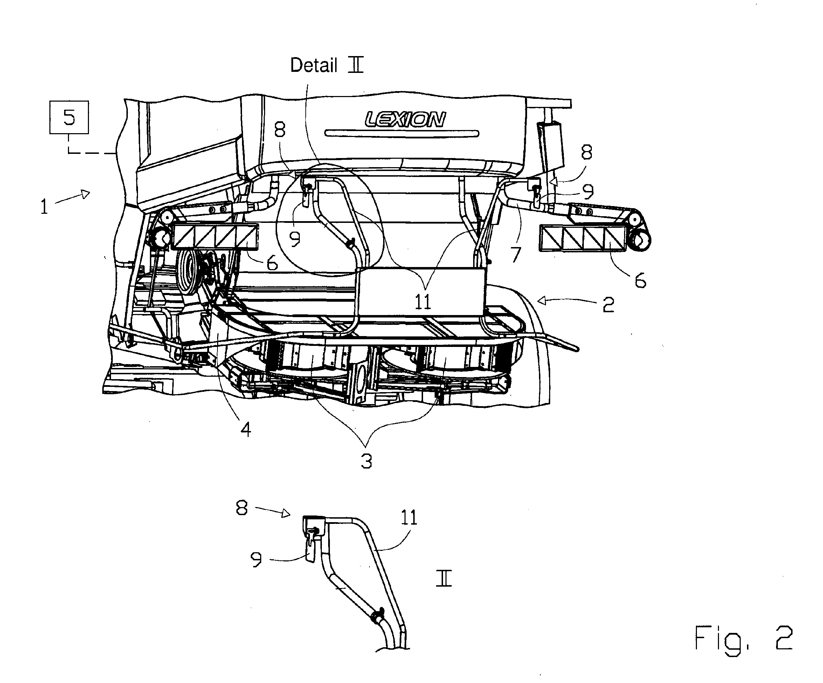

Die im rückwärtigen Bereich des Mähdreschers 1 angeordnete Verteilvorrichtung 2 besteht aus zwei Wurfgebläsen 3, die an einem Rahmen 4 außerhalb eines Häckslergehäuses gelagert sind. Eine in den Fig. 1 und 2 nur schematisch angedeutete Steuerungseinrichtung 5 steht mit der Verteilvorrichtung 2 in Verbindung, um die Verteilbreite der Verteilvorrichtung 2 über deren Antriebe und/oder Leitelemente zu steuern.

Oberhalb der Verteilvorrichtung 2 sind beidseitig des Mähdreschers 1 in dessen Heckbereich Rückleuchten 6 an Schwenkarmen 7 angeordnet, die sich quer zur Fahrrichtung des Mähdreschers 1 erstrecken. An den Schwenkarmen 7 ist zudem jeweils eine Windmesseinrichtung 8 angeordnet, die vorzugsweise in einer gemeinsamen horizontalen Ebene liegen. Die Windmesseinrichtungen 8 sind beidseitig der Verteilvorrichtung 2 einander gegenüberliegend am Mähdrescher 1 angeordnet. Die Windmesseinrichtung 8 ist jeweils als eine schwenkbar aufgehängte Platte 9 ausgeführt, die um eine horizontale, sich im Wesentlichen parallel zur Fahrrichtung erstreckende Achse schwenkbar gelagert ist, und die durch Seitenwind eine Auslenkung erfährt, wie in der Detailansicht I dargestellt ist. Die Auslenkung der Platte 9 wird durch einen Winkelsensor 10 erfasst, der vorzugsweise als ein Drehpotentiometer ausgeführt ist. Um ein Überschlagen der Platte 9 zu vermeiden, ist die Auslenkung der Platte 9 durch Endanschläge vorzugsweise auf einen Winkelbetrag von etwa 45° begrenzt.

In gleicher Weise kann durch die Windmesseinrichtung 8 auch eine sich während des Ernteprozesses einstellende Neigung des Mähdreschers 1 erfasst werden, da dies ebenfalls zu einer Auslenkung der Platte 9 führt.

Die Darstellung in Fig. 2 zeigt eine zweite Ausführungsform eines Mähdreschers 1. Die Anordnung der Winkelmesseinrichtung 8 erfolgt über eine separate Haltevorrichtung 11, die ebenfalls im Heckbereich des Mähdreschers 1 oberhalb der Verteilvorrichtung 2 an dem Mähdrescher 1 befestigbar ist. Beide in den Fig. 1 und 2 dargestellten Ausführungsbeispielen erlauben eine einfache Nachrüstbarkeit der Windmesseinrichtungen 8 an einem Mähdrescher 1.

Die Steuerungseinrichtung 5 kann über eine eigene Anzeige- und Eingabeeinheit verfügen, die vorzugsweise in der Kabine des Mähdreschers 1 angeordnet ist, oder mit einer externen Anzeige- und Eingabeeinheit in der Kabine in Verbindung stehen, um eine Grundeinstellung zur Steuerung der Verteilvorrichtung 2 vorgeben zu können. Die Grundeinstellung wird durch die Bedienperson des Mähdreschers 1 vorgenommen, indem diese erntegutspezifische Informationen, wie die Fruchtart und die Feuchtigkeit, sowie die Streubreite, im Allgemeinen in Abhängigkeit von der Vorsatzgerätebereite, die Streurichtung und den einzuhaltenden Abstand zur Bestandskante über die Eingabeeinheit in die Steuerungseinrichtung 5 eingibt. In Abhängigkeit von dieser Grundeinstellung werden der Antrieb und/oder die Leitelemente der Verteilvorrichtung 2 angesteuert, um eine gleichmäßige Verteilung des gehäckselten Erntegutes auf dem Boden zu erreichen.

Die beiden beidseitig der Verteilvorrichtung 2 angeordneten Windmesseinrichtungen 8 liefern jeweils ein Signal S1, S2, welches die Stärke und die Richtung des Seitenwindes repräsentiert, wobei die Signalamplituden der Signale S1, S2 unterschiedlich hoch ausfallen können, was beispielsweise durch die Abschattung des Mähdreschers 1 selbst bedingt ist. Zur Minimierung des Einflusses der Windabschattung durch den Mähdrescher 1 auf die Erfassung des Seitenwindes durch die Windmesseinrichtungen 8 wird lediglich das Signal S1, S2 mit der höheren Signalamplitude von der Steuerungseinrichtung 5 zu einer Ansteuerung der Verteilvorrichtung 2 zu Grunde gelegt, um die Grundeinstellung der Verteileinrichtung 2 an sich ändernde Verteilbedingungen in Folge des Seitenwindes aber auch einer Änderung der Querneigung des Mähdreschers 1 anzupassen.

Um den tatsächlichen Seitenwindverhältnissen Rechnung zu tragen, wird das zu berücksichtigende Signal S1, S2 der Windmesseinrichtung 8 mit einem variablen Verstärkungsfaktor VF beaufschlagt. Der Fahrer erhält hierzu die Möglichkeit, den Verstärkungsfaktor VF über die Eingabe- und Anzeigeeinheit selbst auszuwählen, um nach einer Sichtkontrolle des Verteilergebnisses die Grundeinstellung in einer von ihm bestimmbaren Größenordnung zu übersteuern. Als kleinster Verstärkungsfaktor VF ist der Wert 1 vorgegeben, der stufenlos oder vorzugsweise in diskreten Schritten variierbar ist. Die Wahl des Verstärkungsfaktors VF ist im Wesentlichen von erntegutspezifischen Eigenschaften abhängig. Durch die Auswahl des Verstärkungsfaktors VF werden die Erntegutart, die Feuchtigkeit des Erntegutes aber auch die Bestandshöhe des zu erntenden Erntegutes berücksichtigt. So weist feuchtes Erntegut bekanntermaßen ein höheres Eigengewicht auf als trockeneres, so dass zur Kompensation des Seitenwindes ein größerer Verstärkungsfaktor VF gewählt wird, um bei gegebenen Seitenwindverhältnissen eine gleichbleibende Verteilbreite wie auch Beabstandung zu der Bestandskante zu erreichen. Betrachtet man die Bestandshöhe als erntgutspezifische Eigenschaft, so ist die Bestandshöhe von Weizen gegenüber Mais deutlich niedriger, so dass bei der Ernte von Mais auf Grund der Abschattung der Verteilvorrichtung 2 durch den Maisbestand der Seitenwindeinfluss im Gegensatz zur Ernte im Weizenbestand vernachlässigbar ist.

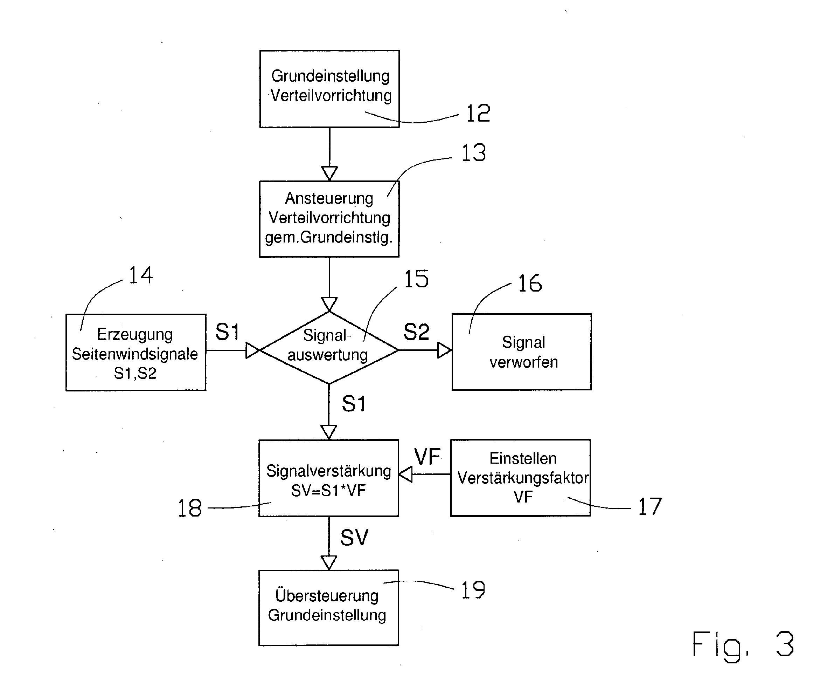

In Fig. 3 ist ein Verfahren zum Betreiben der Steuerungseinrichtung 5 dargestellt. In einem ersten Verfahrensschritt 12 wird zunächst die Grundeinstellung zur Steuerung der Verteilvorrichtung 2 vorgenommen. In diesem Schritt gibt die Bedienperson die zu erreichende Streubreite, im Allgemeinen in Abhängigkeit von der Vorsatzgerätebereite, die Streurichtung sowie den einzuhaltenden Abstand zur Bestandskante vor.

In einem nachfolgenden zweiten Verfahrensschritt 13 wird die Verteilvorrichtung 2 entsprechend der Grundeinstellung angesteuert und der Erntevorgang begonnen.

In einem dritten Verfahrensschritt 14 werden von den beiden Windmesseinrichtungen 8 die Stärke und Richtung des Seitenwindes repräsentierende Signale S1, S2 erzeugt und an die Steuerungseinrichtung 5 weitergeleitet. Diese wertet im vierten Verfahrensschritt 15 die Signalstärke der beiden Signale S1 und S2 aus, und entscheidet anhand der Signalstärkendifferenz, welches der beiden Signale S1, S2 weiterverwendet wird beziehungsweise welches Signal S1, S2 im fünften Verfahrensschritt 16 verworfen wird. In einem sechsten Verfahrensschritt 17 erfolgt eine Prüfung des Verteilergebnisses, beispielsweise durch eine Sichtkontrolle des ausgebrachten, gehäckselten Erntegutes, die durch die Bedienperson durchgeführt werden kann. Eine Automatisierung der Verteilergebniskontrolle ist ebenfalls denkbar, wenn hierzu auf eine optische Sensorik zurückgegriffen wird. Auf der Grundlage der Sichtkontrolle entscheidet die Bedienperson, mit welchem Verstärkungsfaktor VF das Signal S1 verstärkt werden soll, um die Einflüsse durch Seitenwind und/oder eine bestehende Neigung bei Hanglage des Mähdreschers 1 beim Ausbringen des gehäckselten Erntegutes durch die Verteilvorrichtung 2 zu kompensieren. Hierzu stellt die Bedienperson in dem sechsten Verfahrensschritt 17 den Verstärkungsfaktor VF ein.

Das in dem Verfahrensschritt 15 ausgewählte stärkere Signal S1 wird in einem siebten Verfahrensschritt 18 mit dem in dem sechsten Verfahrensschritt 17 eingestellten Verstärkungsfaktor VF beaufschlagt und der in dem ersten Verfahrensschritt 12 voreingestellten Grundeinstellung überlagert. In einem achten Verfahrensschritt 19 wird die Verteilvorrichtung 2 mit einem sich einstellenden Verteilersteuerungssignal SV, welches aus der in dem ersten Verfahrensschritt 12 getroffenen Grundeinstellung und dem um den Verstärkungsfaktor VF verstärkten Signal S1 resultiert, entsprechend angesteuert.

### Bezugszeichenliste

- 1: Mähdrescher
- 2: Verteilvorrichtung
- 3: Wurfgebläse
- 4: Rahmen
- 5: Steuerungseinrichtung
- 6: Rückleuchte
- 7: Schwenkarm
- 8: Windmesseinrichtung
- 9: Platte
- 10: Winkelsensor
- 11: Haltevorrichtung
- 12: Erster Verfahrensschritt
- 13: Zweiter Verfahrensschritt
- 14: Dritter Verfahrensschritt
- 15: Vierter Verfahrensschritt
- 16: Fünfter Verfahrensschritt
- 17: Sechster Verfahrensschritt
- 18: Siebter Verfahrensschritt
- 19: Achter Verfahrensschritt
- S1, S2: Signal
- VF: Verstärkungsfaktor
- SV: Verteilersteuerungssignal

## Patentansprüche

1. Mähdrescher (1), mit einer Verteilvorrichtung (2) zur Verteilung gehäckselten Erntegutes, die mit einer Steuerungseinrichtung (5) in Verbindung steht, der eine Grundeinstellung zur Steuerung der Verteilvorrichtung (1) vorgegeben wird, um die Verteileigenschaften der Verteilvorrichtung (2) zu steuern, wobei im Heckbereich des Mähdreschers (1) beidseitig der Verteilvorrichtung (2) jeweils eine Windmesseinrichtung (8) angeordnet ist,
**dadurch gekennzeichnet,**
**dass** über die zwei Windmesseinrichtungen (8) die Windrichtung und die Windstärke des Seitenwindes repräsentierende Signale (S1, S2) erzeugt und von der Steuerungseinrichtung (5) miteinander verglichen werden, und dass das Signal (S1, S2), welches eine größere Signalstärke aufweist, der Steuerungseinrichtung (5) zur Ansteuerung der Verteilvorrichtung (5) zu Grunde gelegt wird, um die Grundeinstellung an sich ändernde Verteilbedingungen anzupassen.

2. Mähdrescher (1) nach Anspruch 1, **dadurch gekennzeichnet, dass** die beiden Windmesseinrichtungen (8) in einer gemeinsamen horizontalen Ebene am Mähdrescher (1) angeordnet sind.

3. Mähdrescher (1) nach einem der Ansprüche 1 oder 2, **dadurch gekennzeichnet, dass** die beiden Windmesseinrichtungen (8) oberhalb der Verteilvorrichtung (1) und unterhalb einer horizontalen, den Mähdrescher (1) in vertikaler Richtung begrenzenden Ebene positioniert sind.

4. Mähdrescher (1) nach einem der Ansprüche 1 bis 3, **dadurch gekennzeichnet, dass** die Windmesseinrichtungen (8) jeweils eine um eine horizontale Achse schwenkbar aufgehängte Platte (9) umfassen.

5. Mähdrescher (1) nach Anspruch 4, **dadurch gekennzeichnet, dass** die jeweilige Windmesseinrichtung (8) einen Winkelsensor umfasst, der die Auslenkung der Platte (9) erfasst.

6. Mähdrescher (1) nach einem der Ansprüche 4 oder 5, **dadurch gekennzeichnet, dass** die Auslenkung der Platte (9) durch Endanschläge begrenzt ist.

7. Verfahren zum Betreiben einer Steuerungseinrichtung (5) zur Steuerung einer Verteilvorrichtung (2) von Häckselgut, bei welchem eine Grundeinstellung zur Steuerung der Verteilvorrichtung (1) vorgegeben wird,
**dadurch gekennzeichnet,**
**dass** über zwei Windmesseinrichtungen (8) die Windrichtung und die Windstärke des Seitenwindes repräsentierende Signale (S1, S2) erzeugt und von der Steuerungseinrichtung (5) miteinander verglichen werden, und dass das Signal (S1, S2), welches eine größere Signalstärke aufweist, der Steuerungseinrichtung (5) zur Ansteuerung der Verteilvorrichtung (5) zu Grunde gelegt wird, um die Grundeinstellung an sich ändernde Verteilbedingungen anzupassen.

8. Verfahren nach Anspruch 7, **dadurch gekennzeichnet, dass** das zur Ansteuerung verwendete Signal (S1, S2) um einen variabel einstellbaren Verstärkungsfaktor (VF) verstärkt wird.

9. Verfahren nach Anspruch 8, **dadurch gekennzeichnet, dass** der Verstärkungsfaktor (VF) in Abhängigkeit von Ernteguteigenschaften eingestellt wird.

10. Verfahren nach einem der Ansprüche 7 bis 9, **dadurch gekennzeichnet, dass** vor dem Vergleich der Sensorsignale (S1, S2) miteinander diese von der Steuerungseinrichtung (5) über einen Mittelwertfilter geglättet werden.

## Claims

1. A combine harvester (1) comprising a distributing device (2) for distributing chopped crop material, which is connected to a control device (5) to which a basic setting is predetermined for controlling the distributing device (2) to control the distribution properties of the distributing device (2), wherein a respective wind anemometer is arranged in the tail region of the combine harvester (1) at both sides of the distributing device (2),
**characterised in that**
signals (S1, S2) representing the wind direction and wind strength of the side wind are produced by way of the two wind anemometers (8) and are compared together by the control device (5), and the signal (S1, S2) which has a greater signal strength is taken as the basis for the control device (5) for controlling the distributing device (5) to adapt the basic setting to changing distribution conditions.

2. A combine harvester (1) according to claim 1 **characterised in that** the two wind anemometers (8) are arranged in a common horizontal plane on the combine harvester (1).

3. A combine harvester (1) according to one of claims 1 and 2 **characterised in that** the two wind anemometers (8) are positioned above the distributing device (2) and below a horizontal plane delimiting the combine harvester (1) in the vertical direction.

4. A combine harvester (1) according to one of claims 1 to 3 **characterised in that** the wind anemometers (8) respectively include a plate (9) suspended pivotably about a horizontal axis.

5. A combine harvester (1) according to claim 4 **characterised in that** the respective wind anemometer (8) includes an angle sensor which detects the deflection of the plate (9).

6. A combine harvester (1) according to one of claims 4 and 5 **characterised in that** the deflection of the plate (9) is limited by end stops.

7. A method of operating a control device (5) for controlling a chopped material distributing device (2) in which a basic setting is predetermined for control of the distributing device (1),
**characterised in that**
signals (S1, S2) representing the wind direction and wind strength of the side wind are produced by way of two wind anemometers (8) and are compared together by the control device (5), and the signal (S1, S2) which has a greater signal strength is taken as the basis for the control device (5) for controlling the distributing device (5) to adapt the basic setting to changing distribution conditions.

8. A method according to claim 7 **characterised in that** the signal (S1, S2) used for control purposes is amplified by a variably adjustable amplification factor (VF).

9. A method according to claim 8 **characterised in that** the amplification factor (VF) is adjusted in dependence on crop material properties.

10. A method according to one of claims 7 to 9 **characterised in that** prior to the comparison of the sensor signals (S1, S2) with each other they are smoothed by the control device (5) by way of a mean value filter.

## Revendications

1. Moissonneuse-batteuse (1), avec un dispositif de répartition (2) pour répartir un produit de récolte haché, lequel est en communication avec un dispositif de commande (5) auquel est imposé un réglage de base pour la commande du dispositif de répartition (2) afin de commander les propriétés de répartition du dispositif de répartition (2), un dispositif de mesure du vent (8) étant disposé de chaque côté du dispositif de répartition (2) dans la partie arrière de la moissonneuse-batteuse (1), **caractérisée en ce que** des signaux (S1, S2) représentant la direction de vent et la force de vent du vent latéral sont générés par les deux dispositifs de mesure du vent (8) et comparés entre eux par le dispositif de commande (5), et **en ce que** le signal (S1, S2) qui présente une intensité de signal plus grande est pris pour base par le dispositif de commande (5) pour commander le dispositif de répartition (5) afin d'adapter le réglage de base aux conditions changeantes de répartition.

2. Moissonneuse-batteuse (1) selon la revendication 1, **caractérisée en ce que** les deux dispositifs de mesure du vent (8) sont disposés sur la moissonneuse-batteuse (1) dans un plan horizontal commun.

3. Moissonneuse-batteuse (1) selon l'une des revendications 1 ou 2, **caractérisée en ce que** les deux dispositifs de mesure du vent (8) sont positionnés au-dessus du dispositif de répartition (1) et au-dessous d'un plan horizontal limitant la moissonneuse-batteuse (1) dans la direction verticale.

4. Moissonneuse-batteuse (1) selon l'une des revendications 1 à 3, **caractérisée en ce que** les dispositifs de mesure du vent (8) comprennent chacun une plaque (9) suspendue de manière à pouvoir pivoter autour d'un axe horizontal.

5. Moissonneuse-batteuse (1) selon la revendication 4, **caractérisée en ce que** chaque dispositif de mesure du vent (8) comprend un capteur d'angle qui détecte la déviation de la plaque (9).

6. Moissonneuse-batteuse (1) selon l'une des revendications 4 ou 5, **caractérisée en ce que** la déviation de la plaque (9) est limitée par des butées d'extrémité.

7. Procédé de fonctionnement d'un dispositif de commande (5) pour commander un dispositif de répartition (2) d'un produit haché, selon lequel un réglage de base est imposé pour la commande du dispositif de répartition (1), **caractérisé en ce que** des signaux (S1, S2) représentant la direction de vent et la force de vent du vent latéral sont générés par deux dispositifs de mesure du vent (8) et comparés entre eux par le dispositif de commande (5), et **en ce que** le signal (S1, S2) qui présente une intensité de signal plus grande est pris pour base par le dispositif de commande (5) pour commander le dispositif de répartition (5) afin d'adapter le réglage de base aux conditions changeantes de répartition.

8. Procédé selon la revendication 7, **caractérisé en ce que** le signal (S1, S2) utilisé pour la commande est amplifié d'un facteur d'amplification (VF) réglable de manière variable.

9. Procédé selon la revendication 8, **caractérisé en ce que** le facteur d'amplification (VF) est réglé en fonction de propriétés du produit de récolte.

10. Procédé selon l'une des revendications 7 à 9, **caractérisée en ce que**, avant la comparaison des signaux de capteurs (S1, S2) entre eux, ceux-ci sont lissés par le dispositif de commande (5) au moyen d'un filtre de moyenne.
